# EUROPÄISCHE PATENTSCHRIFT

(11) **EP 4 032 704 B1**
(45) Veröffentlichungstag und Bekanntmachung des Hinweises auf die Patenterteilung: **05.03.2025**
(21) Anmeldenummer: 22151277.5
(22) Anmeldetag: 13.01.2022
(51) Int. Cl.: B32B 38/06, B42D 25/324, B42D 25/425, B42D 25/455, B42D 25/46

(54) **VERFAHREN ZUR HERSTELLUNG EINES FOLIENVERBUNDES FÜR EIN WERT- ODER SICHERHEITSDOKUMENT**
METHOD FOR PRODUCING A FILM COMPOSITE FOR A VALUABLE OR SECURITY DOCUMENT
PROCÉDÉ DE FABRICATION D'UNE FEUILLE COMPOSITE POUR UN DOCUMENT DE VALEUR OU DE SÉCURITÉ

(30) Priorität: 20.01.2021 DE 102021101126
(43) Veröffentlichungstag der Anmeldung: 27.07.2022
(73) Patentinhaber: Bundesdruckerei GmbH, 10969 Berlin (DE)
(72) Erfinder: Bielesch, Ulrich, 56132 Frücht (DE); Mauderer, Michael, 81825 München (DE); Rötzer, Martin, 85229 Markt Intersdorf (DE)
(74) Vertreter: Mammel und Maser Patentanwälte PartG mbB

(56) Entgegenhaltungen:
- DE-A1- 102016 105 157
- GB-A- 942 214
- US-A- 3 904 465
- US-A- 4 105 491
- US-A1- 2019 152 252

## Beschreibung

Die Erfindung betrifft ein Verfahren zur Herstellung eines Folienverbundes für ein Wert- oder Sicherheitsdokument, bei dem eine Materialkernbahn und zumindest eine Materialbahn kontinuierlich in einer Laminationsvorrichtung zu einem Folienverbund laminiert werden.

Aus der DE 10 2016 105 157 A1 ist ein solches Verfahren bekannt. Zum Laminieren von mehreren Materialbahnen zu einem Folienverbund werden diese parallel zueinander durch Transportrollen auf Abstand gehalten und geführt. Nach dem Verlassen dieser Transportrollen und vor dem Zuführen zur Laminationsvorrichtung werden die Materialbahnen mit zumindest einem Heizelement vorgewärmt. Darauffolgend werden diese vorgewärmten Materialbahnen mit einem Walzenpaar zusammengeführt und anschließend der Laminationsvorrichtung zugeführt und miteinander zu dem Folienverbund laminiert.

Aus der US 2019/0152252 A1 ist ein aus mehreren Schichten hergestellter Folienverbund bekannt. Dieser Folienverbund wird in mehreren aufeinanderfolgenden Laminationsschritten hergestellt. Dabei ist eine Lamination von bereits auf ein Format geschnittene Schichten vorgesehen. In einem ersten Laminationsschritt wird über eine Laminierplatte in eine weiße PC-Schicht eine Prägung eingebracht. Darauffolgend werden mehrere Schichten beidseitig zu der geprägten mittleren PC-Schicht positioniert. In einem nachfolgenden Schritt werden die übereinander gestapelten Schichten laminiert und zu einem Dokumentenkörper miteinander verbunden.

Bei der Herstellung solcher Dokumente, die durch die Prägestelle ein innenliegendes Wasserzeichen ausbilden, ist eine Nachbildung oder Verfremdung erschwert, da bei einer Manipulation die Struktur der Prägung zerstört werden würde. Allerdings weist diese Herstellung des Dokuments den Nachteil auf, dass sowohl die Prägeplatten als auch eine Veränderung der Wasserzeichen sehr kostenintensiv ist.

Aus der DE 101 49 416 A1 ist ein Verfahren zum Prägen von fertiggestellten Informationsträgern, wie beispielsweise Kreditkarten, Ausweiskarten, Kundenkarten oder dergleichen bekannt. Die hergestellten und auf Maß geschnittenen Informationsträger werden einer Prägevorrichtung zugeführt, die mehrere Typenträger in Form von Zahlen, Buchstaben umfasst, um eine Zeile aus mehreren Zeichen in eine Außenseite des fertiggestellten Informationsträgers einzuprägen. Bei dieser Kennzeichnung der Informationsträger kann eine Nachbildung oder Verfremdung des Informationsträgers durch Ablösen der geprägten Schicht und durch das Aufbringen einer neuen Schicht erfolgen.

Aus der US 4 105 491 A sowie der US 904 465 A geht ein Verfahren zum Verbinden von einer ebenen Folie und einer geprägten Folie hervor. Die geprägte Folie wird mittels einer Prägewalze erzeugt, die rautenförmig ausgebildete und umlaufende Stege aufweist, durch welche Verbindungslinien zwischen den beiden Folien geschaffen werden.

Aus der GB 942 241 A ist ein Verfahren bekannt, bei welchem Vertiefungen in regelmäßigen Abständen in eine Folie eingebracht werden, die ein- oder beidseitig mit einer Dichtungsschicht verbunden werden.

Der Erfindung liegt die Aufgabe zugrunde, ein Verfahren zur Herstellung eines Folienverbundes für ein Wert- oder Sicherheitsdokument vorzuschlagen, durch welches in kostengünstiger Weise bei einer hohen Prozesssicherheit eine innenliegende Kennzeichnung in dem Folienverbund ermöglicht wird.

Diese Aufgabe wird durch ein Verfahren zum Herstellen eines Folienverbundes für ein Wert- oder Sicherheitsdokument gelöst, bei dem eine Materialkernbahn und zumindest eine Materialbahn kontinuierlich in einer Laminationsvorrichtung zu einem Folienverbund laminiert werden, wobei die Materialkernbahn vorgewärmt einer Prägevorrichtung zugeführt wird, in die Materialkernbahn zumindest eine Prägung eingebracht wird, zumindest eine weitere Materialbahn vorgewärmt und die Prägung der Materialkernbahn überdeckend zugeführt wird und die Materialkernbahn und die zumindest eine Materialbahn in der Laminationsvorrichtung zu dem Folienverbund laminiert werden. Durch das Einbringen einer Prägung in die Materialkernbahn in einem kontinuierlichen Herstellungsverfahren kann ein innenliegendes Sicherheitsmerkmal, wie beispielsweise eine Prägung oder ein Wasserzeichen, eingebracht werden, wobei durch die zumindest eine auf die Prägung aufgebrachte Materialbahn ein Verbund mit der Materialkernbahn gebildet wird, der bei einer Manipulation zerstört würde, sobald die Schichten aufgespalten oder voneinander getrennt werden sollten. Darüber hinaus wird durch die kontinuierliche Herstellung des Folienverbundes mit den aufeinanderfolgenden einzelnen Schritten eine hohe Prozesssicherheit gewährleistet.

Vorteilhafterweise ist vorgesehen, dass die Materialkernbahn mit einer thermischen Strahlung einer Heizvorrichtung auf eine Temperatur unterhalb der Glasübergangstemperatur erwärmt wird. Dies ermöglicht ein vereinfachtes Einbringen einer Prägung in einem kontinuierlichen Prozess.

Des Weiteren ist bevorzugt vorgesehen, dass in die Materialkernbahn eine personalisierte Prägung eingebracht wird. Dadurch kann jeder Folienverbund mit einer individuellen Prägung versehen sein, die nur für diesen Folienverbund vergeben wird. Insbesondere kann die personalisierte Prägung eine Redundanz von Informationen für den Inhaber des Dokumentes oder mit weiteren auf oder in den Folienverbund eingebrachten Sicherheitsmerkmalen aufweisen.

Die Materialkernbahn wird bevorzugt zwischen einem rotierenden Prägestempel und einer planaren Gegenfläche hindurchgeführt. Dies ermöglicht, dass eine einseitige Prägung bei gleichzeitiger Aufrechterhaltung einer gegenüberliegenden ebenen Außenfläche ermöglicht wird. Alternativ kann auch vorgesehen sein, dass anstelle der planaren Gegenfläche eine rotierende Gegenwalze mit einer glatten Umfangsfläche vorgesehen ist.

Durch den Prägestempel der Prägevorrichtung wird bevorzugt eine Tiefprägung eingebracht. Dies erschwert das Trennen von der daran anschließend auflaminierten zumindest einer weiteren Materialbahn, da die weitere Materialbahn die tiefen Prägungen vollständig ausfüllt.

Insbesondere ist vorgesehen, dass der Prägestempel nach jeder Prägung auf eine neue Prägung eingestellt oder umgestellt wird, die zumindest von der vorausgehenden Prägung abweicht. Beispielsweise kann der Prägestempel aus mehreren Rädern bestehen, an deren Außenumfang die verschiedenen Kennzeichen, wie Zahlen, Buchstaben, Symbole oder dergleichen vorgesehen sind. Dadurch kann eine zusätzliche Individualisierung des Folienverbundes erfolgen, wobei die Individualisierung auch bereits einzelne Informationen und Daten des Dokumenteninhabers in einer unmittelbaren oder in einer verschlüsselten Form aufweisen kann.

Eine weitere vorteilhafte Ausgestaltung des Verfahrens sieht vor, dass vor dem Zuführen der zumindest einen Materialbahn auf die eingebrachte Prägung in die Materialkernbahn die eingebrachte Prägung abgekühlt wird. Dadurch kann beim nachfolgenden Laminieren der zumindest einen weiteren Materialbahn eine Schwächung oder Beeinträchtigung der eingebrachten Prägung verhindert werden.

Bevorzugt ist zwischen der Prägestation und der Vorlaminationsstation ein Speicher für die Materialkernbahn beziehungsweise Materialkernbahn mit der zumindest einen Materialbahn vorgesehen. Der Speicher kann beispielsweise Tänzerrollen umfassen. Dadurch kann eine kontinuierliche Lamination bei einer getakteten Prägung in der Prägestation beibehalten werden. In der Prägestation können individuelle oder personalisierte Prägeinformationen auf die Materialkernbahn beziehungsweise Materialkernbahn mit der zumindest einen Materialbahn eingebracht werden.

Gemäß einer ersten Ausführungsform der Prägestation kann diese einen rotierenden Prägestempel und einen planaren Gegenstempel umfassen. Alternativ kann die Prägestation einen rotierenden Prägestempel und eine rotierende Gegenwalze umfassen.

Die zumindest eine auf die Materialkernbahn zugeführte Materialbahn wird bevorzugt vor dem Zusammenführen durch eine thermische Strahlung einer Heizvorrichtung über eine Glasübergangstemperatur erhitzt. Dadurch wird ein nachfolgender Arbeitsschritt in einer Vorlaminationsstation vorbereitet.

Die Materialkernbahn mit der eingebrachten Prägung und die zumindest eine erhitzte Materialbahn werden gemeinsam einer Vorlaminierstation zugeführt und Bereiche der auf eine oberhalb der Glasübergangstemperatur erhitzten Materialbahn füllen die Unebenheiten der Prägung in der Materialkernbahn aus. Dadurch kann insbesondere bei einer Tiefprägung ein vollständiges Ausfüllen der Unebenheiten erfolgen.

Insbesondere werden die Materialkernbahn und die zumindest eine Materialbahn nach dem Durchlaufen der Vorlaminierstation und der Laminationsstation mit ebenen Außenflächen aus der Laminationsstation herausgeführt. Dies weist den Vorteil auf, dass die Prägestrukturen in das Dokument eingeschlossen und zunächst von außen nicht zu erkennen sind.

Gemäß einer vorteilhaften Weiterbildung des Verfahrens ist vorgesehen, dass der Folienverbund mit der innenliegenden, vorzugsweise personalisierten, Prägung, die in einer ersten Prozessstation hergestellt wird, einer nachfolgenden zweiten Prozessstation zugeführt wird. In dieser zweiten Prozessstation wird der Folienverbund einer Prägevorrichtung zugeführt und in eine Außenfläche des aus der ersten Prozessstation herausgeführten Folienverbundes wird eine weitere Prägung, vorzugsweise personalisierte Prägung, eingebracht und diese zumindest eine eingebrachte Prägung mit zumindest einer weiteren Materialbahn überdeckt und laminiert. Durch eine solche Aneinanderreihung von Prägungen ist ein erhöhter Schutz gegen Manipulationen gegeben. Vorteilhafterweise können die zumindest zwei in den Folienverbund eingebrachten Prägungen an gleicher Stelle und in Übereinstimmung vorgesehen sein. Alternativ können auch unterschiedliche individualisierte Prägungen an gleicher oder an benachbarten Stellen zueinander eingebracht werden.

Der Folienverbund wird bevorzugt aus einer Materialkernbahn hergestellt, die als eine opake oder transluzente Folie ausgebildet ist und durch die zumindest eine Materialbahn, die als eine transparente Folie ausgebildet ist. Ein solcher Folienverbund ermöglicht, dass bei normaler Betrachtung die innenliegende Prägung oder das innenliegende Wasserzeichen nicht erkennbar ist, jedoch bei einer Betrachtung im Durchlicht zu erkennen ist.

Gemäß einer weiteren vorteilhaften Ausgestaltung des Folienverbundes ist vorgesehen, dass die zumindest eine Materialbahn transparent und ein- oder durchgefärbt ist. Beispielsweise wird unter einer transparenten Materialbahn eine durchsichtige Materialbahn verstanden. Das hinter der Materialbahn liegende Objekt oder die dahinterliegende Information ist klar oder relativ scharf zu erkennen, also insbesondere nicht verschwommen. Bei der Verwendung von mehreren Materialbahnen für den Folienverbund können die einzelnen Materialbahnen mit voneinander abweichender Farbe eingefärbt oder durchgefärbt werden und/oder können voneinander abweichende Dicken aufweisen. Dies weist den Vorteil auf, dass der Folienverbund in verschiedenen Ebenen, welche durch die Materialbahnen gebildet werden, im Durchlicht in leicht unterschiedlicher Farbigkeit erscheinen oder einen neuen Farbton durch die Überlagerung bilden kann. Insbesondere kann auch bei der Einbringung von mehreren Prägungen oder Wasserzeichen eine unterschiedliche visuelle Erkennbarkeit gegeben sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Darstellung eines Laminationsprozesses zur Herstellung des Folienverbundes mit einer Prägung, und
- Figur 2: eine schematische Darstellung eines Laminationsprozesses zur Herstellung einer alternativen Ausführungsform des Folienverbundes zu Figur 1.

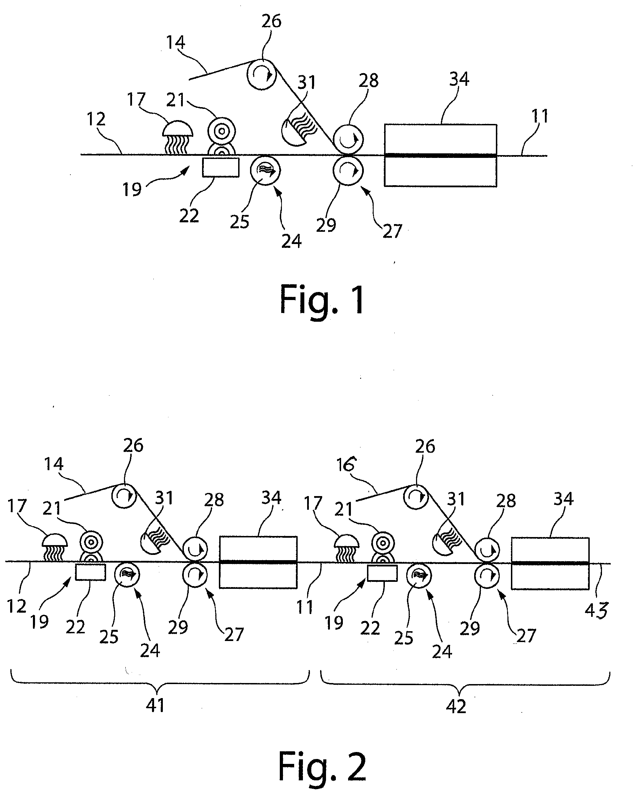

In Figur 1 ist schematisch ein Verfahren zur Herstellung eines Folienverbundes 11 dargestellt. Dieser Folienverbund 11 wird aus einer Materialkernbahn 12 und zumindest einer Materialbahn 14 gebildet. Zur Vereinfachung der Darstellung des Verfahrens ist nur eine weitere Materialbahn 14 dargestellt.

Die Materialkernbahn 12 wird einer Heizvorrichtung 17 zugeführt. Während dem Hindurchführen der Materialbahn 14 durch die Heizvorrichtung 17 wird diese durch eine thermische Strahlung erhitzt. Das Aufheizen der Materialkernbahn 12 erfolgt dabei in Abhängigkeit des nachfolgenden Bearbeitungsschrittes zum Einbringen einer Prägung in die Materialkernbahn 12.

Die erwärmte oder erhitzte Materialkernbahn 12 wird darauffolgend einer Prägestation 19 zugeführt. In dieser Prägestation 19 wird bevorzugt einseitig eine Prägung in die Materialkernbahn 12 eingebracht. Alternativ kann auch eine beidseitige Prägung erfolgen. Im Ausführungsbeispiel gemäß Figur 1 ist vorgesehen, dass die Prägestation 19 einen rotierenden Prägestempel 21 und einen planaren Gegenstempel 22 umfasst. Dieser Prägestempel 21 weist bevorzugt mehrere Prägeelemente auf, wie beispielsweise Zeichen, Buchstaben, Zahlen, Symbole oder dergleichen. Diese können in variabler und individueller Weise ausgewählt und einander zugeordnet werden. Durch diesen Prägestempel 21 kann eine personalisierte Prägung in eine Außenfläche der erwärmten Materialkernbahn 12 eingebracht werden. Diese Prägung kann auch ein personalisiertes Wasserzeichen sein.

In einem nachfolgenden Schritt wird die geprägte Materialkernbahn 12 einer Kühlstation 24 zugeführt. Diese Kühlstation 24 kann eine temperierte Kühlwalze 25 aufweisen, entlang der die ebene Außenfläche der Materialkernbahn 12 geführt und gleichzeitig abgekühlt wird. Dabei ist eine Temperaturführung vorgesehen, so dass die eingebrachte Prägung beständig in der Materialkernbahn 12 steht.

In einem nächsten Schritt wird die Materialkernbahn 12 einer Vorlaminationsstation 27 zugeführt. Diese Vorlaminationsstation 27 umfasst ein Walzenpaar aus einander gegenüberliegenden Walzen 28, 29. Dieser Vorlaminationsstation 27 wird gleichzeitig die zumindest eine Materialbahn 14, beispielsweise über eine Führungswalze 26, zugeführt. Vor der Vorlaminationsstation 27 ist eine weitere Heizvorrichtung 31 vorgesehen. Die zumindest eine Materialbahn 14 wird durch thermische Strahlung auf eine Temperatur oberhalb der Glasübergangstemperatur der Materialbahn 14 erhitzt.

In der Vorlaminationsstation 27 wird somit die Materialkernbahn 12 mit der abgekühlten Prägung als auch die zumindest eine Materialbahn 14, welche auf eine Temperatur oberhalb der Glasübergangstemperatur erhitzt ist, zusammengeführt. Dies ermöglicht, dass die zumindest eine Materialbahn 14 in die Unebenheiten der Prägung fließen kann und diese ausgefüllt werden.

In einem darauffolgenden Verfahrensschritt werden die Materialkernbahn 12 und die zumindest eine Materialbahn 14 zu dem Folienverbund 11 laminiert. Vorteilhafterweise wird der Folienverbund 11 mit einander gegenüberliegenden ebenen Außenflächen aus der Laminationsstation 34 herausgeführt.

Die Materialkernbahn 12 besteht vorzugsweise aus einer opaken oder transluzenten Folie. Die zumindest eine Materialbahn 14 besteht bevorzugt aus einer transparenten Folie. Diese transparente Folie kann ein- oder durchgefärbt sein, wobei bei mehreren Materialbahnen 14 auch verschiedenfarbige Einfärbungen vorgesehen sein können.

Die Materialkernbahn 12 und die Materialbahnen 14, 16 bestehen beispielsweise aus einer Folie oder einer Schicht aus einem thermoplastischen Elastomer. Insbesondere bestehen diese aus einem organischen Polymerwerkstoff. Dieser organische Polymerwerkstoff kann ausgewählt werden aus einer Gruppe bestehend aus PC (Polycarbonat, insbesondere Bisphenol A Polycarbonat), PET (Polyethylenglykolterephthalat), PMMA (Polymethylmethacrylat), TPU (Thermoplastische Polyurethan Elastomere), PI (Polyimid oder Poly-trans-Isopren), Polystyrol, Polyacrylate und Methacrylate, Vinylester, ABS und Copolymere solcher Polymere, Cycloolefin-Copolymere, Polysulfone, Polyester, PET, PEN, Polycarbonat/Polyester-Blends, zum Beispiel PC/CoPET, Polycarbonat/Polycyclohexylmethanol-cyclohexandicarboxylat, insbesondere Polycarbonate oder Copolycarbonate auf Basis von Diphenolen, Poly- oder Copolyacrylate, Poly- oder Copolymethacrylate, Poly- oder Copolymere mit Styrol, thermoplastische Polyurethane, Polyolefine, Poly- oder Copolykondensate der Terephthalsäure oder Naphthalindicarbonsäure oder Mischungen aus diesen, besonders bevorzugt Polycarbonate oder Copolycarbonate auf Basis von Diphenolen, Poly- oder Copolyacrylate, Poly- oder Copolymethacrylate, Poly- oder Copolykondensate der Terephthalsäure oder Naphthalindicarbonsäure oder Mischungen aus diesen.

Der durch das vorbeschriebene Verfahren hergestellte Folienverbund 11 weist den Vorteil auf, dass dieser eine innenliegende und insbesondere personalisierte Prägung oder Wasserzeichen aufweist. Diese Prägung ist im Folienverbund 11 bei normaler Betrachtung nicht sichtbar, jedoch bei einer Betrachtung im Durchlicht gut zu erkennen.

In Figur 2 ist eine schematische Darstellung einer alternativen Ausführungsform des Verfahrens zur Herstellung des Folienverbundes 43 gemäß Figur 1 dargestellt. Bei dieser Ausführungsform ist vorgesehen, dass die Verfahrensschritte zur Herstellung des Folienverbundes 11 gemäß Figur 2 zumindest einmal aufeinanderfolgend durchgeführt werden. Das Verfahren gemäß Figur 2 umfasst eine erste Prozessstation 41, durch welche der Folienverbund 11 gemäß Figur 1 hergestellt wird. Daran schließt sich eine zweite Prozessstation 42 an, welche im Aufbau und in der Abfolge der Arbeitsschritte der ersten Prozessstation 41 entspricht. Abweichend hiervon ist, dass in der zweiten Prozessstation 42 der Folienverbund 11 gemäß Figur 1 als Materialkernbahn 12 zugeführt wird. Der aus der ersten Prozessstation 41 herausgeführte Folienverbund 11 wird in der zweiten Prozessstation 42 der Heizstation 17 zugeführt, so dass die zur Heizstation 17 weisende Schicht, welche bevorzugt die zumindest eine Materialbahn 14 ist, erwärmt wird. Darauffolgend wird der Folienverbund 11 mit der erwärmten Materialbahn 14 der Prägestation 19 zugeführt. In dieser Prägestation 19 kann dieselbe Prägung wie in der ersten Prozessstation 41 eingebracht werden. Diese Prägung kann auch an derselben Stelle vorgenommen werden. Alternativ kann benachbart zur ersten Prägung die zweite Prägung eingebracht werden. Des Weiteren kann die zweite Prägung von der ersten Prägung abweichen. In einem darauffolgenden Schritt wird der Folienverbund 11 mit der auf die zumindest eine Materialbahn 14 eingebrachte zweite Prägung abgekühlt und darauffolgend der Vorlaminierstation 27 zugeführt. Parallel hierzu wird zumindest eine weitere Materialbahn 16 durch die Heizvorrichtung 31 auf eine Temperatur oberhalb deren Glasübergangstemperatur erhitzt und der Vorlaminierstation 27 zugeführt. In der Vorlaminierstation 27 werden die Unebenheiten der zweiten Prägung durch die zugeführte Materialbahn 16 ausgefüllt. Darauffolgend wird der um die Materialbahn 16 ergänzte Folienverbund 11 der Laminierstation 34 zugeführt, laminiert und als neuer Folienverbund 43 mit zwei Prägungen herausgeführt.

Bei dieser Ausführungsform kann vorgesehen sein, dass die zumindest eine Materialbahn 14, welche in der ersten Prozessstation 11 der Materialkernbahn 12 zugeführt wird und die zumindest eine weitere Materialbahn 16, welche in der Prozessstation 42 zugeführt wird, in der Dicke und/oder Ein- oder Durchfärbung unterschiedlich sind. Dadurch kann zusätzlich eine farbliche Hervorhebung der ersten und zweiten Prägung, insbesondere in der voneinander abweichenden Ausführungsform ermöglicht sein.

Der hergestellte Folienverbund 11, 43 kann weiteren Prozessstationen mit Präge- und Laminierstationen zugeführt werden, wodurch sich die farblichen Variationsmöglichkeiten erweitern und nach dem Ausstanzen oder Zuschneiden auf ein Format selbst das Wert- oder Sicherheitsdokument bilden. Des Weiteren ist ermöglicht, dass der Folienverbund 11, 43 ein Halbzeug für die Weiterverarbeitung darstellt, um beispielsweise eine personalisierte Datenseite für ein buchartiges Wert- oder Sicherheitsdokument, wie beispielsweise einen Reisepass, herzustellen.

### Bezugszeichenliste

11. Folienverbund
12. Materialkernbahn
14. Materialbahn
16. weitere Materialbahn
17. Heizvorrichtung
19. Prägestation
21. Prägestempel
22. Gegenstempel
24. Kühlstation
25. Kühlwalze
26. Führungswalze
27. Vorlaminationsstation
28. Walze
29. Walze
31. Heizvorrichtung
34. Laminationsstation
41. erste Prozessstation
42. zweite Prozessstation
43. Folienverbund

## Patentansprüche

1. Verfahren zur Herstellung eines Folienverbundes (11, 43) für ein Wert- oder Sicherheitsdokument,
- bei dem eine Materialkernbahn (12) und zumindest eine Materialbahn (14, 16) kontinuierlich in einer Laminationsvorrichtung (34) zu dem Folienverbund (11, 43) laminiert werden, wobei
- die Materialkernbahn (12) vorgewärmt einer Prägestation (19) zugeführt wird,
- in die Materialkernbahn (12) zumindest einseitig eine Prägung eingebracht wird,
- die zumindest eine Materialbahn (14) vorgewärmt wird und zur Überdeckung der Prägung auf die Materialkernbahn (12) zugeführt wird, und
- die Materialkernbahn (12) und die zumindest eine Materialbahn (14) in der Laminationsstation (34) zu dem Folienverbund (11) laminiert werden.

2. Verfahren nach Anspruch 1, **dadurch gekennzeichnet, dass** die Materialkernbahn (12) mit einer thermischen Strahlung einer Heizvorrichtung (17) auf eine Temperatur unterhalb der Glasübergangstemperatur erwärmt wird.

3. Verfahren nach Anspruch 1 oder 2, **dadurch gekennzeichnet, dass** eine personalisierte Prägung eingebracht wird.

4. Verfahren nach einem der vorhergehenden Ansprüche, **dadurch gekennzeichnet, dass** die Materialkernbahn (12) zwischen einem rotierenden Prägestempel (21) und einem planaren Gegenstempel (22) oder einer rotierenden Gegenwalze unter Einbringen der Prägung hindurchgeführt werden.

5. Verfahren nach Anspruch 3 oder 4, **dadurch gekennzeichnet, dass** durch den Prägestempel (21) eine Tiefprägung eingebracht wird, welche vorzugsweise durch Material der zugeführten weiteren Materialbahn (14, 16) völlig ausgefüllt wird.

6. Verfahren nach Anspruch 3 bis 5, **dadurch gekennzeichnet, dass** der Prägestempel (21) nach jedem Einbringen der Prägung in die Materialkernbahn (12) auf eine weitere Prägung, vorzugsweise personalisierte Prägung, ein- oder umgestellt wird, die zumindest von der vorausgehenden Prägung abweicht.

7. Verfahren nach einem der vorhergehenden Ansprüche, **dadurch gekennzeichnet, dass** vor dem Zuführen der zumindest einen weiteren Materialbahn (14) auf die Prägung der Materialkernbahn (12) die eingebrachte Prägung, vorzugsweise durch zumindest eine Kühlwalze (25), abgekühlt wird.

8. Verfahren nach einem der vorhergehenden Ansprüche, **dadurch gekennzeichnet, dass** zwischen der Prägestation (19) und der Vorlaminationsstation (27) die Materialkernbahn (12) oder die Materialkernbahn (11) und die zumindest eine Materialbahn (14, 16) in einem Speicher für eine nachfolgende kontinuierliche Lamination gespeichert werden.

9. Verfahren nach einem der vorhergehenden Ansprüche, **dadurch gekennzeichnet, dass** die zumindest eine zugeführte Materialbahn (14, 16) durch thermische Strahlung einer Heizvorrichtung (31) auf eine Temperatur über der Glasübergangstemperatur erhitzt wird.

10. Verfahren nach Anspruch 9, **dadurch gekennzeichnet, dass** die Materialkernbahn (12) mit der Prägung und die zumindest eine erhitzte Materialbahn (14) einer Vorlaminationsstation (27) zugeführt und durch die erhitzte Materialbahn (14) Unebenheiten der Prägung in der Materialkernbahn (12) ausgefüllt werden.

11. Verfahren nach einem der vorhergehenden Ansprüche, **dadurch gekennzeichnet, dass** die Materialkernbahn (12) und die zumindest eine Materialbahn (14) mit jeweils ebenen Außenflächen aus der Laminationsstation (34) herausgeführt werden.

12. Verfahren nach einem der vorhergehenden Ansprüche, **dadurch gekennzeichnet, dass** der Folienverbund (11) mit der innenliegenden Prägung in einer ersten Prozessstation (41) hergestellt und in einer nachfolgenden zweiten Prozessstation (42) einer weiteren Prägestation (19) zugeführt und deckungsgleich oder benachbart zur ersten Prägung eine weitere Prägung in eine Außenfläche der zumindest einen Materialbahn (14) eingebracht wird und zumindest eine weitere Materialbahn (16) auf die zumindest eine weitere Prägung aufgebracht und die Unebenheiten ausgefüllt und darauffolgend miteinander zu einem Folienverbund (43) laminiert werden.

13. Verfahren nach einem der vorhergehenden Ansprüche, **dadurch gekennzeichnet, dass** der Folienverbund (11, 43) aus der Materialkernbahn (12), die als opake oder transluzente Folie ausgebildet ist, und aus der zumindest einen Materialbahn (14, 16), die als eine transparente Folie ausgebildet ist, hergestellt wird.

14. Verfahren nach einem der vorhergehenden Ansprüche, **dadurch gekennzeichnet, dass** die zumindest eine Materialbahn (14, 16) transparent und ein- oder durchgefärbt ist.

15. Verfahren nach Anspruch 14, **dadurch gekennzeichnet, dass** bei mehreren Materialbahnen (14, 16), die mit der Materialkernbahn (12) laminiert werden, die einzelnen Materialbahnen (14, 16) mit voneinander abweichenden Farben ein- oder durchgefärbt sind und/oder voneinander abweichende Dicken aufweisen.

## Claims

1. Method for producing a film composite (11, 43) for a security document,
- in which a material core web (12) and at least one material web (14, 16) are continuously laminated in a laminating device (34) to form the film composite (11, 43),
wherein
- the material core web (12) is fed preheated to an embossing station (19),
- an embossing is introduced into at least one side of the material core web (12) embossing is applied to at least one side,
- the at least one material web (14) is preheated and fed onto the material core web (12) to cover the embossing, and
- the material core web (12) and the at least one material web (14) are laminated in the lamination station (34) to form the film composite (11).

2. Method according to claim 1, **characterized in that** the material core web (12) is heated to a temperature below the glass transition temperature by thermal radiation from a heating device (17).

3. Method according to claim 1 or 2, **characterized in that** a personalized embossing is introduced.

4. Method according to one of the preceding claims, **characterized in that** the material core web (12) is passed between a rotating embossing punch (21) and a planar counter-punch (22) or a rotating counter-roller while the embossing is being introduced.

5. Method according to claim 3 or 4, **characterized in that** a deep embossing is introduced by the embossing die (21), which is preferably completely filled by material from the further material web (14, 16) supplied.

6. Method according to claim 3 to 5, **characterized in that** the embossing die (21) is set or switched to a further embossing, preferably personalized embossing, after each introduction of the embossing into the material core web (12), which at least differs from the preceding embossing.

7. Method according to one of the preceding claims, **characterized in that** before the at least one further material web (14) is fed onto the embossing of the material core web (12), the embossing introduced is cooled, preferably by at least one cooling roller (25).

8. Method according to one of the preceding claims, **characterized in that** between the embossing station (19) and the prelamination station (27), the material core web (12) or the material core web (11) and the at least one material web (14, 16) are stored in a memory for subsequent continuous lamination.

9. Method according to one of the preceding claims, **characterized in that** the at least one supplied material web (14, 16) is heated to a temperature above the glass transition temperature by thermal radiation from a heating device (31).

10. Method according to claim 9, **characterized in that** the material core web (12) with the embossing and the at least one heated material web (14) are fed to a prelamination station (27) and unevennesses of the embossing in the material core web (12) are filled in by the heated material web (14).

11. Method according to one of the preceding claims, **characterized in that** the material core web (12) and the at least one material web (14) are led out of the lamination station (34) with flat outer surfaces in each case.

12. Method according to one of the preceding claims, **characterized in that** the film composite (11) with the internal embossing is produced in a first process station (41) and fed to a further embossing station (19) in a subsequent second process station (42) and a further embossing is introduced into an outer surface of the at least one material web (14) congruently with or adjacent to the first embossing and at least one further material web (16) is applied to the at least one further embossing and the unevennesses are filled in and subsequently laminated together to form a film composite (43).

13. Method according to one of the preceding claims, **characterized in that** the film composite (11, 43) is produced from the material core web (12), which is designed as an opaque or translucent film, and from the at least one material web (14, 16), which is designed as a transparent film.

14. Method according to one of the preceding claims, **characterized in that** the at least one material web (14, 16) is transparent and dyed in or through.

15. Method according to claim 14, **characterized in that**, in the case of a plurality of material webs (14, 16) which are laminated to the material core web (12), the individual material webs (14, 16) are dyed in or through with colors which differ from one another and/or have thicknesses which differ from one another.

## Revendications

1. Procédé de fabrication d'un film composite (11, 43) pour un document de valeur ou de sécurité,
- dans lequel une bande centrale de matériau (12) et au moins une bande de matériau (14, 16) sont laminées en continu dans un dispositif de lamination (34) pour former le film composite (11, 43),
selon lequel
- la bande centrale de matériau (12) est amenée préchauffée à un poste d'estampage (19),
- dans la bande centrale de matériau (12), au moins d'un côté, une empreinte est réalisé,
- la au moins une bande de matériau (14) est préchauffée et est amenée sur la bande centrale de matériau (12) pour recouvrir l'empreinte, et
- en ce que la bande de noyau de matériau (12) et la au moins une bande de matériau (14) sont laminées dans le poste de lamination (34) pour former le film composite (11).

2. Procédé selon la revendication 1, **caractérisé en ce que** la bande centrale de matériau (12) est chauffée par un rayonnement thermique d'un dispositif de chauffage (17) à une température inférieure à la température de transition vitreuse.

3. Procédé selon la revendication 1 ou 2, **caractérisé en ce qu'**une empreinte personnalisée est introduite.

4. Procédé selon l'une des revendications précédentes, **caractérisé en ce que** la bande de noyau de matériau (12) est passée entre un poinçon d'estampage rotatif (21) et un contre-poinçon plan (22) ou un contre-rouleau rotatif en introduisant l'estampage.

5. Procédé selon la revendication 3 ou 4, **caractérisé en ce qu'**une empreinte profonde est réalisée par le poinçon d'estampage (21), laquelle est de préférence entièrement remplie par le matériau de l'autre bande de matériau (14, 16) amenée.

6. Procédé selon les revendications 3 à 5, **caractérisé en ce que** le poinçon d'estampage (21), après chaque introduction de l'estampage dans la bande centrale de matériau (12), est mis en marche ou commuté sur un autre estampage, de préférence un estampage personnalisé, qui diffère au moins de l'estampage précédent.

7. Procédé selon l'une des revendications précédentes, **caractérisé en ce qu'**avant d'amener l'au moins une autre bande de matériau (14) sur l'empreinte de la bande centrale de matériau (12), l'empreinte introduite est refroidie, de préférence par au moins un rouleau de refroidissement (25).

8. Procédé selon l'une des revendications précédentes, **caractérisé en ce qu'**entre le poste d'estampage (19) et le poste de prélaminage (27), la bande de noyau de matériau (12) ou la bande de noyau de matériau (11) et la au moins une bande de matériau (14, 16) sont stockées dans une mémoire pour un laminage continu ultérieur.

9. Procédé selon l'une quelconque des revendications précédentes, **caractérisé en ce que** ladite au moins une bande de matériau fournie (14, 16) est chauffée par rayonnement thermique d'un dispositif de chauffage (31) à une température supérieure à la température de transition vitreuse.

10. Procédé selon la revendication 9, **caractérisé en ce que** la bande de matériau centrale (12) avec l'estampage et la au moins une bande de matériau chauffée (14) sont amenées à un poste de prélaminage (27) et les inégalités de l'estampage dans la bande de matériau centrale (12) sont remplies par la bande de matériau chauffée (14).

11. Procédé selon l'une quelconque des revendications précédentes, **caractérisé en ce que** la bande de noyau de matériau (12) et la au moins une bande de matériau (14) sont sorties du poste de lamination (34) avec des surfaces extérieures planes respectives.

12. Procédé selon l'une des revendications précédentes, **caractérisé en ce que** le film composite (11) avec l'estampage intérieur est fabriqué dans un premier poste de traitement (41) et amené dans un deuxième poste de traitement (42) suivant à un autre poste d'estampage (19) et un autre estampage est réalisé en coïncidence ou au voisinage du premier estampage dans une surface extérieure de la au moins une bande de matériau (14) et au moins une autre bande de matériau (16) est appliquée sur le au moins un autre estampage et les inégalités sont remplies et sont ensuite laminées ensemble pour former un film composite (43).

13. Procédé selon l'une quelconque des revendications précédentes, **caractérisé en ce que** le film composite (11, 43) est fabriqué à partir de la bande centrale de matériau (12), qui est conçue comme un film opaque ou translucide, et à partir d'au moins une bande de matériau (14, 16), qui est conçue comme un film transparent.

14. Procédé selon l'une quelconque des revendications précédentes, **caractérisé en ce que** ladite au moins une bande de matériau (14, 16) est transparente et teintée dans une couleur ou dans la masse.

15. Procédé selon la revendication 14, **caractérisé en ce que**, dans le cas de plusieurs bandes de matériau (14, 16) qui sont laminées avec la bande centrale de matériau (12), les bandes de matériau individuelles (14, 16) sont teintées ou teintées dans la masse avec des couleurs différentes les unes des autres et/ou présentent des épaisseurs différentes les unes des autres.
